# EUROPEAN PATENT APPLICATION

(11) **EP 4 282 378 A1**
(43) Date of publication of application: **29.11.2023**
(21) Application number: 22175174.6
(22) Date of filing: 24.05.2022
(51) Int. Cl.: A61C 17/22

(54) **ORAL CARE DEVICE**

(71) Applicant: Koninklijke Philips N.V., 5656 AG Eindhoven (NL)
(72) Inventor: TAMMINGA, Stephanus Jacob Gerardus, Eindhoven (NL)
(74) Representative: Philips Intellectual Property & Standards

(57) **Abstract**

The invention provides a mouthpiece device (10) for oral cleaning with a dedicated mechanical structure (24) for providing a support onto which the user can hold fast their jaw in order to anchor the non-moving part of the mouthpiece to the reference frame of the jaw, such that the moving part of the mouthpiece, which carries cleaning elements (20), moves in an approximately predictable way relative to the upper and lower rows of teeth.

## Description

### FIELD OF THE INVENTION

The present invention relates to the field of oral care devices, and in particular to powered mouthpiece devices.

### BACKGROUND OF THE INVENTION

Powered dental cleaning mouthpiece devices are known which comprise a mouthpiece portion which is received in the mouth of user which carries cleaning elements which are driven to brush the teeth of a user around all or part of their dental arch simultaneously.

Various elements of such a dental cleaning mouthpiece are designed to move during operation, particularly the cleaning elements relative to the teeth. In practice, elements will move during operation relative to the most rigid point in the device-mouth system. For instance, if an element is designed for the purpose of moving up-and-down in the mouth, along an axis extending from the lower to upper jaw, but is anchored to the lower jaw, it will not be able to move down, and all motion will consequently be made in only the upwards direction.

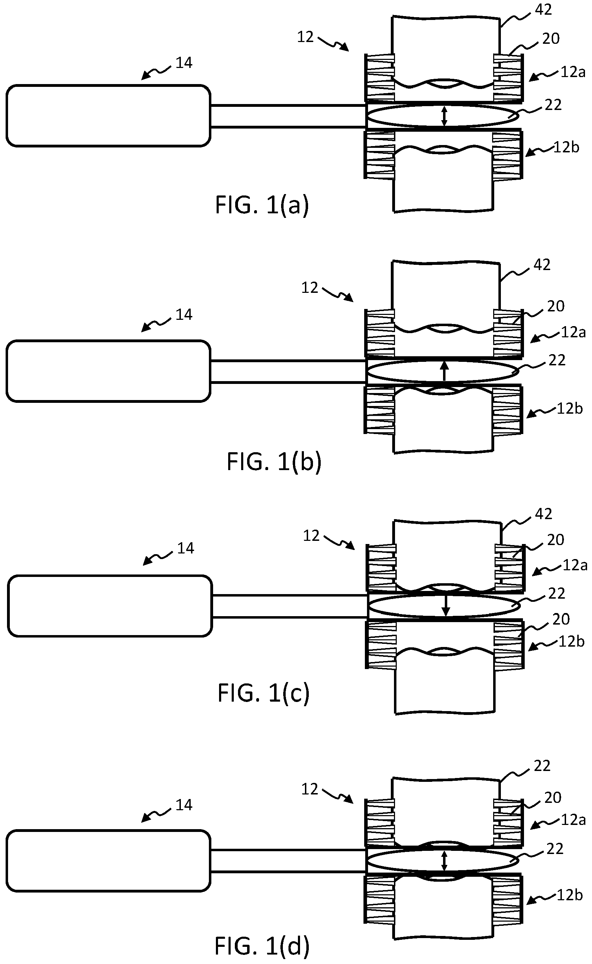

The problem is illustrated more fully in Fig. 1(a)-(d) which show four example scenarios. Each case shows use of a schematically illustrated mouthpiece device. The device has a handle portion 14 and a mouthpiece portion 12. The mouthpiece portion comprises upper 12a and lower 12a parts which comprise channels designed for receiving upper and lower rows of teeth 42. Inside each channel are tufts of cleaning elements 20, e.g. bristles, which protrude toward surfaces of teeth received in the upper 12a and lower 12b parts. An actuation mechanism 22 is provided which acts to drive motion of the upper and lower channels 12a, 12b relative to the main body of the mouthpiece, and this is intended to induce motion of the cleaning elements up and down relative to tooth 42 surfaces. In this example, the actuation mechanism 22 comprises a hydraulic bladder system, with inflating/deflating bladder which drives up/down motion.

Fig. 1(a) shows a first scenario. In this case, a user (not shown) firmly holds the device handle 14 steady while avoiding biting down on the mouthpiece portion (indicated generally by arrow 12). Thus, the mouthpiece 12a, 12b, 22 is "floating" between the upper and lower jaws. In this case, the up-and-down motion of the bladder 22 is made with respect to the device body 14, and in both directions (up and down).

In principle this scenario would allow proper brushing motions to be made with respect to the jaw. However, it is hard in practice for a user to keep the device steady enough and to not let it rest against one of the jaws.

Fig. 1(b) shows a second scenario. In this case, the user allows the mouthpiece to rest against the lower jaw, in particular allowing the lower row of teeth to rest against the base of the lower channel 12b. In this event, the bladder 22 can now only expand upwards (because it is impeded from below), and so only the upper teeth are exposed to movement of the cleaning elements 20, while the teeth of the lower jaw are not.

Fig. 1(c) shows a third scenario. Here, the user allows the mouthpiece to rest against the teeth of the upper jaw. Now, the bladder 22 can only expand downwards (because it is impeded from above), and so only the teeth of the lower jaw are exposed to movement of cleaning elements, while the teeth of the upper jaw are not.

Fig. 1(d) shows the fourth scenario. In this case, the user is biting down on the mouthpiece from above and below, which will either block movement of the actuation mechanism 22 (if the actuation mechanism lacks sufficient power to resist the bite force, e.g. the hydraulic pump in this case cannot deliver enough pressure to the bladder) or the upper and lower jaws are both induced to move by the bladder 22. In the latter case however, there is no relative motion induced between the cleaning elements 20 and the teeth.

It can be seen from the above scenarios that a consistent motion applied evenly to upper and lower jaws is difficult to achieve in practice using a handheld mouthpiece.

Developments in the field of powered cleaning mouthpiece devices, able to address one or more of the above problems, would be of value.

### SUMMARY OF THE INVENTION

It has been recognized by the inventors that although user handling can influence the anchoring point of a brushing device, design choices can be made to guide anchoring in a manner that does not strain the arm of a user and at the same time achieves the correct relative motion. The inventors propose herein solutions motivated by this aim.

The invention is defined by the claims.

According to examples in accordance with an aspect of the invention, there is provided an oral care device. The device comprises a mouthpiece portion for at least partial receipt in the mouth of a user. A body of the mouthpiece portion describes an arcuate contour, for approximately following a contour of a user's dental arch. The mouthpiece portion carries a set of oral cleaning elements for mechanical engagement with teeth during use. The device comprises an actuation mechanism for actuating cyclic motion of the cleaning elements relative to teeth when the mouthpiece portion is received in the mouth. The device further comprises an anchoring member engageable by a part of the user's mouth when the mouthpiece portion is received in the mouth for normal use, for holding the anchoring member fixed in position with respect to the jaws, with the cleaning elements being moveable relative to the anchoring member when so held, and wherein, when the anchoring member is held by said part of the user's mouth in normal operation, the actuation mechanism is operable to cause the cleaning elements to move relative to both the upper and lower jaws simultaneously.

It has been recognized by the inventors that the problem described above can be solved by offering an anchoring point which is designed to be held fixed with respect to the jaws by the user during operation. This anchoring point in effect provides a point of reference which acts as a common fixed ground for both the cleaning elements and the jaw, such that the cleaning elements can be induced to move relative to both jaws. One simple example, which will be described in detail to follow, is a bite block. The engagement with the anchoring member, for example biting on a bite block, stabilizes the position of the device without the user needing to hold it steady with respect to their head.

There are different ways of defining the anchoring member, each having an effect on the motion of the brushing elements.

In some embodiments, the anchoring member is part of the mouthpiece portion. For example, it may be an integral part of the mouthpiece portion, or it may be fixedly attached as a section of the mouthpiece portion. This design ensures absence of relative motion between the anchoring member and the mouthpiece portion body. For example, the cleaning elements may be carried by a driving surface or substrate which is moveable relative to a static section of the mouthpiece portion. Thus the cleaning elements can move relative to the fixed point of the anchoring member.

In other cases however, the anchoring member may be attached to another part of the oral care device but in a manner that still permits the movement of the cleaning elements in the manner described above.

In some embodiments, the actuation mechanism may be adapted to induce up/down cyclic motion of the cleaning elements along an up/down vertical axis extending between upper and lower jaws when the mouthpiece portion is received in the mouth for normal use.

In some embodiments, the cleaning elements extend from one or more surfaces which are caused to move (for instance relative to a static section of the main body of the mouthpiece portion) by the actuation mechanism for inducing the motion of the cleaning elements, and wherein the actuation mechanism moves the surface up and down between an upper-most position and a lower-most position. The anchoring member may have a height along said up-down axis which is greater than a height of the mouthpiece body when said one or more surfaces are in their lower-most position. This allows the user to grasp, e.g. bite the anchoring member while still allowing vertical clearance for the cleaning elements to move up and down relative to the teeth.

The anchoring member may protrude from the device in a height dimension.

In some embodiments, the actuation mechanism is adapted to induce in-plane cyclic motion of the cleaning elements along a horizontal axis, the horizontal axis running perpendicular to a vertical axis extending between upper and lower jaws when the mouthpiece portion is received in the mouth for normal use. Thus, different motion directions and patterns are possible, and the inventive concept is not limited to up/down motion of cleaning elements.

In some embodiments, the anchoring member is for clasping by the user between upper and lower sections of the mouth at a location of the mouth.

In one set of examples for instance, the anchoring member is for biting by the user. In this case, the anchoring member might be referred to as a bite block.

In another set of examples, the anchoring member may be for clasping between the lips. In some cases, the anchoring member may be adapted to permit both clasping between the lips and biting. The two are linked in that both involve a solid contact of upper and lower jaw together against the anchoring member, thus holding the anchoring member static relative to the whole of the jaw.

In one set of embodiments, the mouthpiece body is shaped for extending around only a portion of the user's dental arch. For example, the mouthpiece may be J-shaped. This variety of mouthpiece is designed to be moved by the user manually to different positions during a cleaning session to cover the whole mouth. For example, some designs are configured to be flipped over half way through the cleaning session to cover one side of the mouth and then the other.

In this set of embodiments, in some examples, when the mouthpiece portion is received in the mouth for normal use, with an arcuate contour of the mouthpiece portion body aligned with a contour of a dental arch of the user, the anchoring member may be arranged to be approximately positioned for engagement by teeth or lips of the user at a location along the dental arch toward the front of the mouth which is offset from a symmetrical center of the dental arch / mouth.

This has the effect that if the user flips the mouthpiece portion over, for example to clean the other side of the mouth, the location of the anchor member will not be the same as before, and this means that the location which the anchor member was previously obscuring/obstructing is now free to be cleaned during the second cleaning action.

In some embodiments, the mouthpiece body may be shaped for extending, when received in the mouth for normal use, around more than half of the user's dental arch, but less than the whole of the dental arch.

The user can flip over the mouthpiece body to clean one side of the mouth and then the other. This design allows cleaning of the mouth in two actions. By positioning the anchoring member symmetrically offset from a front center position of the mouth, it means that the particular mouth location which the anchoring member engages with for cleaning each side of the mouth is not the same. This means that all teeth are cleaned over the course of the two cleaning intervals, since the anchoring member is not obscuring the same tooth for the whole of the cleaning session.

In some embodiments, the cleaning elements comprise a field of cleaning elements extending along the arcuate contour described by the mouthpiece body, the field having first and second ends, and wherein the anchoring member is located at a position along the cleaning element field inset from one end of the cleaning element field.

Thus, there are cleaning elements either side of the anchor member. This ensures that, as the user changes the position of the mouthpiece portion in the mouth to clean different partial sections of the mouth, the particular tooth with which the anchoring member becomes aligned changes with each change in position, and there is overlap in the coverage of the cleaning element field between any two positions of the mouthpiece portion.

In some further embodiments, the mouthpiece is arranged such that, when the mouthpiece portion is received in the mouth, with an arcuate contour of the mouthpiece portion body aligned with a contour of a dental arch of the user, the anchoring member is approximately positioned for engagement by the user between upper and lower incisor teeth at the front of the mouth; or the anchoring member is approximately positioned for engagement by the user between upper and lower canine teeth at a front left or front right of the mouth. In some embodiments, the mouthpiece may be arranged such that, when the mouthpiece portion is received in the mouth, with an arcuate contour of the mouthpiece portion body aligned with a contour of a dental arch of the user, the anchoring member is approximately positioned for engagement by the user between upper and lower molars at a rear of the mouth. Thus, the position of the anchoring member can be chosen to be arranged at any location in mouth.

In some embodiments, the mouthpiece body may be formed of multiple jointed sections pivotally moveable with respect to one another by hinge joints, and wherein the anchoring member is located at a location of a hinge joint.

This design ensures that there is still good freedom of movement between the two jointed segments either side of the anchoring member.

In some embodiments, the device includes a hollow member located at perimeter of the mouthpiece portion defining an internal conduit which provides a passageway through a wall of the mouthpiece portion to an internal cavity of the mouthpiece portion, the internal cavity housing operative elements of the actuation mechanism, the hollow member having at least a section exposed on the outside of the mouthpiece portion and wherein said section provides the anchor member.

This combines the functionality of the entry member which is already present on the device with the anchoring member, and thus this design adds additional structural efficiency.

In some embodiments, the actuation mechanism is a pneumatic system comprising bellows internal to the mouthpiece portion configured such that inflation and deflation of the bellows induces motion of the cleaning elements in opposite respective directions.

In some examples, the internal conduit of the hollow member referred to above (if provided) may house a pneumatic junction, with pneumatic tubes splitting in two directions along the contour of the mouthpiece. In other examples, the hollow member can act as an entry point for a drive shaft of a drive train mechanism.

In some embodiments, the actuation mechanism comprise a drive train mechanism comprising a motor driving motion of one or more drive members which induce the motion of the cleaning elements.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a problem motivating the making of the invention;
Fig. 2 schematically illustrates an embodiment of the invention;
Fig. 3 schematically illustrates a cross-sectional view of an embodiment of the invention;
Fig. 4 illustrates different example positions for locating the anchoring member;
Fig. 5 and Fig. 6 illustrate an example embodiment of the invention in a J-shaped mouthpiece device, with the anchoring member inset from one end of the mouthpiece body; and
Fig. 7 and Fig. 8 illustrate an example embodiment of the invention in which a utility tube used for conveying a driving line of an actuation mechanism doubles as an anchoring member.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mouthpiece device for oral cleaning with a dedicated mechanical structure (termed an anchoring member) for providing a support onto which the user can hold fast their jaw in order to anchor the non-moving part of the mouthpiece to the reference frame of the jaw, such that the moving part of the mouthpiece (which carries cleaning elements) moves in an approximately predictable way relative to the upper and lower rows of teeth. This avoids inadvertently holding the mouthpiece in such a way that instead the moving part of the mouthpiece becomes engaged fast with one or both rows of teeth, with the result that no movement occurs between cleaning elements and those one or both rows of teeth.

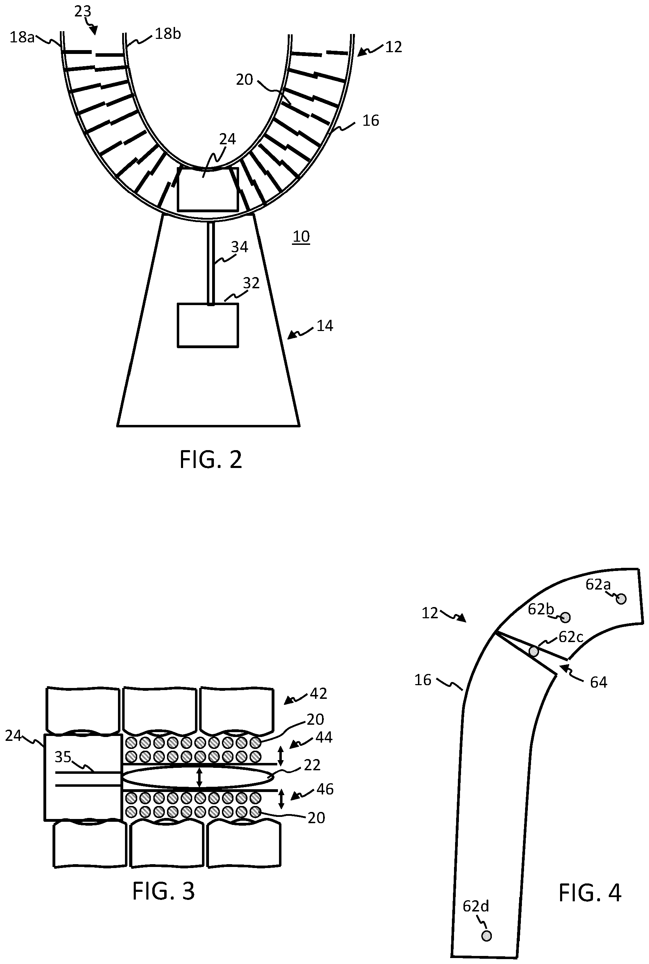

Fig. 2 and Fig. 3 show in schematic form the basic principle. Fig. 2 shows a view of an example mouthpiece device in accordance with one or more embodiments, and Fig. 3 shows a cross-sectional view which illustrates in more detail the effect of the anchoring member upon motion of the cleaning elements relative to the teeth.

The device 10 is an oral care device which comprises, in summary, a mouthpiece portion 12, for at least partial receipt in the mouth of a user, wherein a body 16 of the mouthpiece portion describes an arcuate contour, for approximately following a contour of a user's dental arch. Shown in Fig. 2 is an example in which the mouthpiece body comprises a U-shaped contour, and comprises an outer 18a and inner 18b arcuate wall which define between them a tooth-receiving channel 23. The floor of the channel may be formed by a further surface. There may be a pair of channels, one on a top side (shown in Fig. 2), and one on a bottom side, for receiving the two rows of teeth of user at the same time. In cross-section therefore, the walls 18a, 18b, in combination with the floor of the channel may approximately define an H-shape.

In the illustrated example, and in preferred embodiments, the device 10 further comprises a handle portion 14 attached to the mouthpiece portion 12. The handle portion comprises a housing which may accommodate various electronic components of the device.

The mouthpiece portion 12 carries a set of oral cleaning elements 20 for mechanical engagement with teeth during operation. These may be carried by a moveable section or member of the mouthpiece portion, for example a drive surface or driving frame, which is moveable relative to a static portion of the mouthpiece portion. For example, the mouthpiece body 16 may be a static portion.

The device further comprises an actuation mechanism 32, 34, 22 for actuating cyclic motion of the cleaning elements relative to teeth when the mouthpiece portion is received in the mouth.

In the particular example illustrated in Fig. 3, this actuation mechanism takes the form of a pneumatic system comprising bellows 22 internal to the mouthpiece portion configured such that inflation and deflation of the bellows induces motion of the cleaning elements 20 in opposite respective directions. However, other types of actuation mechanism could clearly be used to similar effect, such as for instance a drive train mechanism comprising a motor driving motion of one or more drive members which induce the motion of the cleaning elements.

As schematically illustrated in Fig. 3, in the particular example illustrated, the motion induced by the actuation mechanism is an up/down cyclic motion of the cleaning elements 20 along an up/down vertical axis extending between upper and lower jaws when the mouthpiece portion is received in the mouth for normal use. However, it is to be noted that instead and/or additional to up/down motion, also other motion patterns are directions are possible and the inventive concept would provide similar advantageous effect also in these cases. For example, the actuation mechanism might be adapted to induce in-plane cyclic motion of the cleaning elements along a horizontal axis, the horizontal axis running perpendicular to a vertical axis extending between upper and lower jaws when the mouthpiece portion is received in the mouth for normal use.

The actuation mechanism in the illustrated example is shown comprising a drive unit 32 and a drive element or line 34 accommodated in the handle portion. The drive unit could be a pump in the case of a pneumatic actuation system. The drive unit 32 could be a motor in the case of a drive train unit. The drive element or line 34 could be a fluid line in the case of a pneumatic system, or could be a drive shaft or member in the case of a drive train mechanism. In either case, the drive element 34 provides the function of communicating the force or driving power generated by the drive unit 32 to an operative moving part of the actuation mechanism which directly applies the force for moving the cleaning elements 20. In the illustrated example, this takes the form of a bellows 22 accommodated within the body of the mouthpiece portion 12. In the illustrated example, the cleaning elements 20 extend from one or more surfaces which are caused to move by the bellows 22 of the actuation mechanism for inducing the motion of the cleaning elements. The actuation mechanism moves the surface up and down cyclically between an upper-most position and a lower-most position. This causes therefore an up/down brushing stroke action against surfaces of the teeth. The view shown in Fig. 3 is shown as a cross-section through the channel 23, with the wall 18a on the front side of the channel cut away.

The mouthpiece portion 12 further comprises an anchoring member 24 which is engageable by a part of the user's mouth when the mouthpiece portion is received in the mouth for normal use, for holding the anchoring member 24 fixed in position with respect to the jaws, with the cleaning elements 20 being moveable relative to the anchoring member when so held, and wherein, when the anchoring member is held by said part of the user's mouth in normal operation, the actuation mechanism 22, 32, 34 is operable to cause the cleaning elements 20 to move relative to both the upper and lower jaws simultaneously.

In the illustrated example, the anchoring member is shown in the form of a simple bite block. In other words, the anchoring member is for biting by the user. As will be explained further below, other arrangements are also possible. For example, the anchoring member 24 may be designed for being clasped between the lips. As a more general principle, any anchoring member may be provided suitable for clasping by the user between upper and lower sections of the mouth at a location of the mouth. For example, in other cases, it may be designed for being clasped by the gums inside the mouth. However, further possibilities even than this are possible, such as being rested onto outer areas of the upper and/or lower mouth, or against the chin, or even held in whole or in part by the tongue. Thus, the illustrated bite block is a simple example shown by way of illustration of the concepts.

In the illustration of Fig. 3, two molars are biting down on an anchoring member 24 in the form of a small block. The height of the block is larger than the bladder 22 in its collapsed state. More generally, it may be preferable if the anchoring member has a height along the up-down axis between the lower and upper jaw which is greater than a height of the mouthpiece body 16 when the one or more surfaces which carry and move the cleaning elements 20 are in their lower-most position.

With the anchoring member held between the teeth as shown, the bladder 22, fixed relative to the bite block, can now expand in both directions relative to the jaws, and thus move the cleaning elements 20 relative to both the upper and lower teeth 42. The biting on the block 24 stabilizes the position of the mouthpiece portion 12 of the device 10 without the user needing to hold it steady with respect to their head.

This principle is thus simple, but different options are possible in terms of the location in the jaw where the anchoring occurs and the exact mechanics of the mouthpiece.

Fig. 4 illustrates different example possible positions 62a-62d for the anchoring member 24 around the arcuate contour of the mouthpiece body 12. Fig. 4 illustrates an example of a mouthpiece design in which the mouthpiece portion is shaped for extending around only a portion of the user's dental arch. It may be termed a J-shaped mouthpiece design.

Position 62a corresponds to a case in which the mouthpiece is designed so that when the mouthpiece portion 12 is received in the mouth for normal use, with an arcuate contour of the mouthpiece portion body aligned with a contour of a dental arch of the user, the anchoring member 24 is approximately positioned for engagement by teeth or lips of the user at a location along the dental arch toward the front of the mouth. For example, the anchoring member 24 may be approximately positioned for engagement by the user between upper and lower incisor teeth at the front of the mouth.

Position 62b corresponds to a case in which the mouthpiece is designed so that when the mouthpiece portion is received in the mouth, with an arcuate contour of the mouthpiece portion body aligned with a contour of a dental arch of the user, the anchoring member is approximately positioned for engagement by the user between upper and lower canine teeth at a front left or front right of the mouth.

Position 62d corresponds to a case in which the mouthpiece is designed so that when the mouthpiece portion is received in the mouth, with an arcuate contour of the mouthpiece portion body aligned with a contour of a dental arch of the user, the anchoring member is approximately positioned for engagement by the user between upper and lower molars at a rear of the mouth.

Position 62c corresponds to an advantageous positioning for a case in which the mouthpiece body is formed of multiple jointed sections pivotally moveable with respect to one another, for example by hinge joints or another linking means. In this case, it may be advantageous to position the anchoring member 24 at the location of one of the joints between the jointed sections. This design ensures that there is still good freedom of movement between the two jointed segments either side of the anchoring member. This could in practice be at any of a range of positions around the contour of the mouthpiece portion 12.

Not shown is the further option to use soft tissue (e.g. lips) as anchoring point.

One consideration which has made itself apparent to the inventors is that, if teeth are used to hold on to the anchoring member 24, then the teeth contacting the anchoring member may not be cleaned by the moving cleaning elements. This has prompted the making of a particular set of embodiments which seeks to mitigate this potential problem.

In particular, according to one set of embodiments, a device is provided in which the mouthpiece portion 12 is shaped for extending, when received in the mouth for normal use, around more than half of the user's dental arch, but less than the whole of the dental arch. It may be a J-shaped mouthpiece in some examples. The mouthpiece portion can be designed so that not the whole mouth is brushed at once; the mouthpiece needs to be used twice, flipping it over between the sessions. This allows a design with an overlap in the covered teeth.

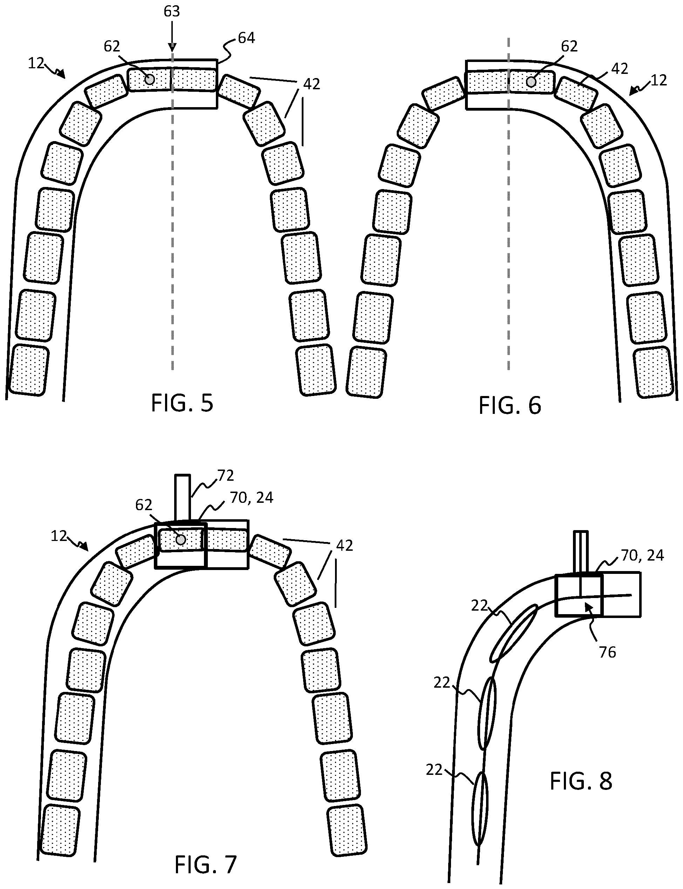

This is illustrated schematically by Fig. 5 and Fig. 6 which show an example mouthpiece portion 12 positioned in use for cleaning initially a first half the mouth (Fig. 5), and then subsequently, by inverting the mouthpiece, the other side of the mouth (Fig. 6). Since the mouthpiece portion is shaped to extend beyond the symmetrical center point (indicated at arrow 63, with the dotted line showing a line a symmetry) at the front of the mouth, and clean one or more teeth on the other side of the mouth beyond this (e.g. in the illustrated case a further incisor tooth), then there is overlap in the teeth that are cleaned. The position 62 of the anchoring member is inset from one end 64 of the mouthpiece portion. More particularly, it is also inset relative to a field of cleaning elements that extends along the length of the arcuate contour of the mouthpiece portion. In this way there are cleaning elements either side of the anchoring member.

During use, in a first session (Fig. 5), the left front tooth is used as the anchoring point 62 - i.e. the user bites the anchoring member in this case with their front left incisor. As a result this tooth is not cleaned during the first session. The front right tooth is however being cleaned during the first session. After the first half of the mouth is clean, the user flips the mouthpiece portion over and cleans the second half of the mouth (Fig. 6). When flipping the J-shape to brush the other side of the mouth, the anchoring point 62 switches to the front right tooth. Thus, in the second session, the front left tooth can now be cleaned by the cleaning elements, while the front right tooth (which has already been cleaned) is obscured by the anchoring member.

From this example can be drawn a principle of more general application, namely, that there is technical advantage in an embodiment in which the mouthpiece is designed such that when the mouthpiece portion 12 is received in the mouth for normal use, with an arcuate contour of the mouthpiece portion body aligned with a contour of a dental arch of the user, the anchoring member 24 is approximately positioned for engagement by teeth or lips of the user at a location along the dental arch toward the front of the mouth which is offset from a symmetrical center 63 of the dental arch. This has the effect that if the user flips the mouthpiece portion over, for example to clean the other side of the mouth, the location of the anchor member will not be the same as before, and this means that the location which the anchor member was previously obscuring/obstructing is now free to be cleaned during the second cleaning action.

In one or more embodiments, the functionality of the anchoring member may be efficiently fulfilled by a component which also performs another function in the context of the device. Fig. 7 for instance illustrates one example. Here, the device includes a hollow member 70 located at perimeter of the mouthpiece portion 12 defining an internal conduit which provides a passageway through a wall of the mouthpiece portion to an internal cavity of the mouthpiece portion, the internal cavity housing operative elements of the actuation mechanism (for example the bellows 22 for a pneumatic system or drive shafts for a mechanical system). The hollow member has at least a section exposed on the outside of the mouthpiece portion. In this set of embodiments, it is proposed to use this section of the hollow member 70 to provide the anchor member 24. This combines two functions with one component, which adds structural efficiency.

For example the hollow member 70 may be an entry point of the drive train into the mouthpiece body, or of the hydraulic tubing into the mouthpiece body. The anchoring point could be at the front teeth and coincident with this entry point. For example, where the actuation mechanism comprises a pneumatic system with bellows inflating and deflating, the anchoring point can for instance be a block (e.g. of plastic) with integrated pneumatic junction, with pneumatic tubes splitting in two directions.

Fig. 8 illustrates this example. Here, the actuation mechanism is a pneumatic system comprising bellows 22 internal to the mouthpiece portion 12 configured such that inflation and deflation of the bellows induces motion of the cleaning elements 20 in opposite respective directions and where the internal conduit of the hollow member 70 houses a pneumatic junction 76, with pneumatic tubes splitting in two directions along the contour of the mouthpiece. Fig. 8 shows that the pneumatic tubing enters at the anchoring member 24 and an internal cavity of the anchoring member accommodates the junction.

In some embodiments, the device may further comprise a local power source, e.g. a battery, for powering the actuation mechanism.

In some embodiments, the device may further comprise a controller, for instance for controlling the actuation mechanism. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An oral care device (10) comprising:
a mouthpiece portion (12) for at least partial receipt in the mouth of a user,
wherein a body (16) of the mouthpiece portion describes an arcuate contour, for approximately following a contour of a user's dental arch;
the mouthpiece portion carrying a set of oral cleaning elements (20) for mechanical engagement with teeth;
an actuation mechanism (22, 32, 34) for actuating cyclic motion of the cleaning elements relative to teeth when the mouthpiece portion is received in the mouth; and
an anchoring member (24) engageable by a part of the user's mouth when the mouthpiece portion is received in the mouth for normal use, for holding the anchoring member fixed in position with respect to the jaws, with the cleaning elements being moveable relative to the anchoring member when so held, and wherein, when the anchoring member is held by said part of the user's mouth in normal operation, the actuation mechanism is operable to cause the cleaning elements to move relative to both the upper and lower jaws simultaneously.

2. The device of claim 1, wherein the actuation mechanism induces up/down cyclic motion of the cleaning elements along an up/down vertical axis extending between upper and lower jaws when the mouthpiece portion is received in the mouth for normal use.

3. The device of claim 2, wherein the cleaning elements extend from one or more surfaces which are caused to move by the actuation mechanism for inducing the motion of the cleaning elements, and wherein the actuation mechanism moves the surface up and down between an upper-most position and a lower-most position,
and wherein the anchoring member has a height along said up-down axis which is greater than a height of the mouthpiece body when said one or more surfaces are in their lower-most position.

4. The device of claim 1, wherein the actuation mechanism is adapted to induce in-plane cyclic motion of the cleaning elements along a horizontal axis, the horizontal axis running perpendicular to a vertical axis extending between upper and lower jaws when the mouthpiece portion is received in the mouth for normal use.

5. The device of any of claims 1-4, wherein the anchoring member is for clasping by the user between upper and lower sections of the mouth at a location of the mouth.

6. The device of any of claims 1-5, wherein the anchoring member is for biting by the user, or for clasping between the lips.

7. The device of any of claims 1-6, wherein the mouthpiece body is shaped for extending around only a portion of the user's dental arch.

8. The device of claim 7, wherein, when the mouthpiece portion is received in the mouth for normal use, with an arcuate contour of the mouthpiece portion body aligned with a contour of a dental arch of the user, the anchoring member is approximately positioned for engagement by teeth or lips of the user at a location along the dental arch toward the front of the mouth which is offset from a symmetrical center of the dental arch.

9. The device of claim 8, wherein the mouthpiece body is shaped for extending, when received in the mouth for normal use, around more than half of the user's dental arch, but less than the whole of the dental arch.

10. The device of any of claims 7-9, wherein the cleaning elements comprise a field of cleaning elements extending along the arcuate contour described by the mouthpiece body, the field having first and second ends, and wherein the anchoring member is located at a position along the cleaning element field inset from one end of the cleaning element field.

11. The device of any of claims 1-10, wherein, when the mouthpiece portion is received in the mouth, with an arcuate contour of the mouthpiece portion body aligned with a contour of a dental arch of the user,
the anchoring member is approximately positioned for engagement by the user between upper and lower incisor teeth at the front of the mouth; or
the anchoring member is approximately positioned for engagement by the user between upper and lower canine teeth at a front left or front right of the mouth.

12. The device of any of claims 1-7, wherein, when the mouthpiece portion is received in the mouth, with an arcuate contour of the mouthpiece portion body aligned with a contour of a dental arch of the user, the anchoring member is approximately positioned for engagement by the user between upper and lower molars at a rear of the mouth.

13. The device of any of claims 1-12, wherein the mouthpiece body is formed of multiple jointed sections pivotally moveable with respect to one another by hinge joints, and wherein the anchoring member is located at a location of a hinge joint.

14. The device of any of claims 1-13, wherein the device includes a hollow member located at perimeter of the mouthpiece portion defining an internal conduit which provides a passageway through a wall of the mouthpiece portion to an internal cavity of the mouthpiece portion, the internal cavity housing operative elements of the actuation mechanism, the hollow member having at least a section exposed on the outside of the mouthpiece portion and wherein said section provides the anchor member.

15. The device of claim 14, wherein
the actuation mechanism is a pneumatic system comprising bellows internal to the mouthpiece portion configured such that inflation and deflation of the bellows induces motion of the cleaning elements in opposite respective directions; and
the internal conduit of the hollow member houses a pneumatic junction, with pneumatic tubes splitting in two directions along the contour of the mouthpiece.
